(19) Europäisches Patentamt

European Patent Office

Office européen des brevets

(11) **EP 1 110 295 B1**

(12) **FASCICULE DE BREVET EUROPEEN**

(45) Date de publication et mention
de la délivrance du brevet:
**15.12.2004 Bulletin 2004/51**

(21) Numéro de dépôt: **99957670.5**

(22) Date de dépôt: **25.06.1999**

(51) Int Cl.$^7$: **H02J 7/10**

(86) Numéro de dépôt international:
**PCT/FR1999/001532**

(87) Numéro de publication internationale:
**WO 2000/001051 (06.01.2000 Gazette 2000/01)**

(54) **PROCEDE DE CONTROLE DE LA RECHARGE D'UNE BATTERIE ET DISPOSITIF POUR LA MISE EN OEUVRE DU PROCEDE**

VERFAHREN UND VORRICHTUNG ZUR BATTERIELADESTEUERUNG

METHOD FOR CONTROLLING A BATTERY RECHARGING AND IMPLEMENTING DEVICE

(84) Etats contractants désignés:
**DE ES GB IT**

(30) Priorité: **26.06.1998 FR 9808138**

(43) Date de publication de la demande:
**27.06.2001 Bulletin 2001/26**

(73) Titulaire: **SAGEM S.A.**
**75116 Paris (FR)**

(72) Inventeurs:
• **BERNARD, Robert**
**F-78700 Conflans Sainte Honorine (FR)**

• **LE FICHOUS, Patrick**
**F-60149 Saint Crépin (FR)**
• **ROMAO, Fernando**
**F-78360 Montesson (FR)**

(74) Mandataire: **Bloch, Gérard**
**2, square de l'Avenue du Bois**
**75116 Paris (FR)**

(56) Documents cités:
**EP-A- 0 225 789        WO-A-96/19860**

**Description**

La présente invention concerne la recharge d'une batterie, en particulier celle d'un combiné de radiotéléphonie. Afin de limiter le poids du combiné, on évite d'utiliser des batteries au plomb et on préfère par exemple des batteries de technologie Cadmium-Nickel ou NiMH (Nickel Métal Hydrure), bien qu'elles soient plus fragiles. Afin d'éviter de les détériorer, on les recharge par un courant limité, à partir d'un chargeur comportant un générateur de courant.

Un générateur de courant est, par nature, prévu pour délivrer le courant voulu, quelle que soit la tension de la batterie. De ce fait, une tension de batterie momentanément très faible ne peut provoquer un appel de courant excessif. Cependant, la tension de la batterie, qui remonte du fait du courant de recharge, ne peut s'opposer à ce courant lorsque la batterie est rechargée. L'énergie du courant de recharge, qui se convertit normalement en énergie chimique de recharge de la batterie, ne peut plus effectuer cette conversion lorsque tout l'électrolyte a été converti et la batterie équivaut, pour le courant de recharge, à une résistance chauffante. L'échauffement correspondant risque alors de la détruire si l'on ne peut détecter l'état de fin de recharge chimique, pour arrêter le courant de recharge.

Pour détecter la fin de la recharge, il est connu de surveiller la tension de la batterie, qui croît pendant la recharge mais décroît légèrement et temporairement dans la phase transitoire pendant laquelle, en fin de recharge, la batterie commence à devenir équivalente à une résistance chauffante.

Cependant, dans un environnement d'utilisation dans un appareil, tel que le combiné évoqué, les circuits alimentés par la batterie sont parfois mis temporairement en veille et réactivés, si bien que les variations de courant de décharge que cela induit provoquent des sauts, positifs ou négatifs, de tension batterie. On risque donc d'interrompre trop tôt une recharge ou, au contraire, de ne jamais l'interrompre si un tel saut de tension masque la baisse temporaire de tension, significative de la fin de la recharge.

La demanderesse a songé à surveiller le niveau absolu de la température de la batterie pour détecter le passage dans le mode « résistance chauffante ». Cependant, le courage de décharge, ou encore les conditions d'environnement du terminal, telle qu'une exposition aux rayons solaires, peuvent aussi provoquer un échauffement de la batterie, qui risque d'être considéré à tort comme une fin de recharge.

EP-A-0225 789 enseigne de détecter une température maximale de batterie pour arrêter la recharge par comparaison de la variation de température à un seuil de consigne.

WO 96 19860 A enseigne de surveiller la température de la batterie et de mesurer l'échauffement qui résulte d'un courant déterminé, pour arrêter la recharge lorsque la variation d'échauffement dépasse un seuil.

La présente invention vise à contrôler de façon encore plus fiable la recharge d'une batterie.

A cet effet, l'invention concerne tout d'abord un procédé de contrôle de la recharge d'une batterie à partir d'un générateur de courant selon la revendication 1.

Ainsi, la variation de courant équivaut à une succession d'impulsions qui se traduit thermiquement au niveau de la batterie par une succession de cycles thermiques en phase avec ces impulsions. C'est cette sensibilité de conversion, ou pente, entre la variation de courant et la variation de température qui est ainsi déterminée pour ramener, si besoin est, le courant à une valeur telle qu'il n'échauffe pas, par lui-même, la batterie d'une valeur dépassant la valeur de seuil de consigne. La valeur de la température ambiante n'intervient pas en tant que telle, puisqu'elle peut être constante, et qu'il suffit de la retrancher aux mesures de température pour en déduire la variation thermique, ou qu'elle peut dériver, mais elle équivaut à une variable évoluant à une fréquence différente de celle des impulsions, donc sans relation de phase avec les impulsions, ce qui permet, à terme, de déterminer précisément l'influence de celles-ci. On conçoit que le procédé s'applique à toute batterie, qu'elle soit isolée ou intégrée dans tout type d'appareil.

L'invention concerne en outre un dispositif de contrôle de recharge d'une batterie (2) agencée pour être alimentée par un chargeur de courant (1), comportant

- des moyens (4, 12) de mesure de la température de la batterie (2),
- des moyens (14 ; 34) de fourniture d'une valeur de seuil de consigne de variation de température de la batterie (2),
- des moyens de variation (3, 40) pour faire varier le courant de recharge,
- des moyens séquenceurs (18) pour commander cycliquement les moyens de variation (3, 40) caractérisé par le fait qu'il comporte

  - des moyens de calcul (15, 16, 17, 19, 20, 21), reliés en entrée aux moyens de fourniture de seuil (14) et aux moyens de mesure de température (4, 12) pour en déterminer une valeur de variation de température par comparaison entre la pente d'échauffement et la pente de refroidissement de la batterie et pour commander des moyens (3, 21, 38) de réglage du courant d'après l'écart entre la variation de température et la valeur de seuil.

L'invention sera mieux comprise à l'aide de la description suivante d'un mode de mise en oeuvre préféré du procédé de l'invention, en référence au dessin annexé, sur lequel :

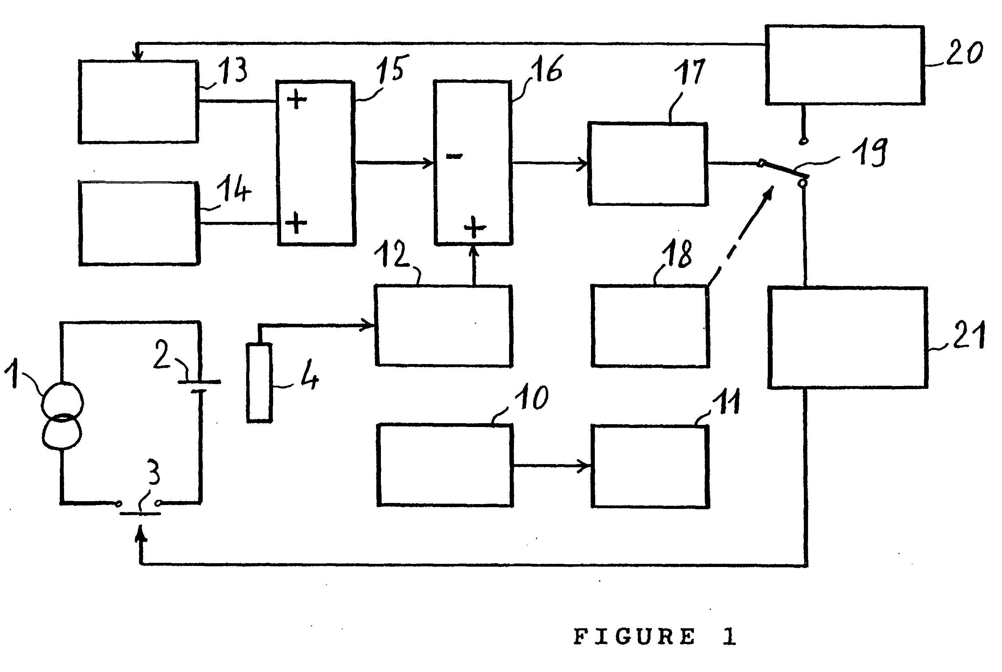

- la figure 1 est un schéma par blocs fonctionnels d'un combiné de radiotéléphonie, mettant en oeuvre le procédé de l'invention,
- la figure 2 est un diagramme temporel illustrant une excitation thermique de la batterie du combiné,
- la figure 3 est un diagramme illustrant les étapes du procédé, et
- la figure 4 est un schéma de circuits de mesure de la température de la batterie.

Le combiné de radiotéléphonie représenté comporte une batterie 2, ici de type NiMH, en série avec un interrupteur 3, présenté sous la forme d'un relais, de contrôle du courant de recharge de la batterie 2, provenant d'un générateur de courant 1 alimenté par le secteur et pouvant se raccorder au combiné par un connecteur.

Sur la batterie 2 est fixé un détecteur de température 4 et, précisément ici, une résistance, ou thermistance, de valeur variant avec la température selon une loi connue. En variante, il aurait pu être prévu une diode, dont la chute de tension, et donc la résistance statique et dynamique, varie en sens inverse de la température.

Une unité centrale à microprocesseur 11, au fonctionnement rythmé par une base de temps 10, assure le contrôle de la recharge de batterie 2, par commande du relais 3.

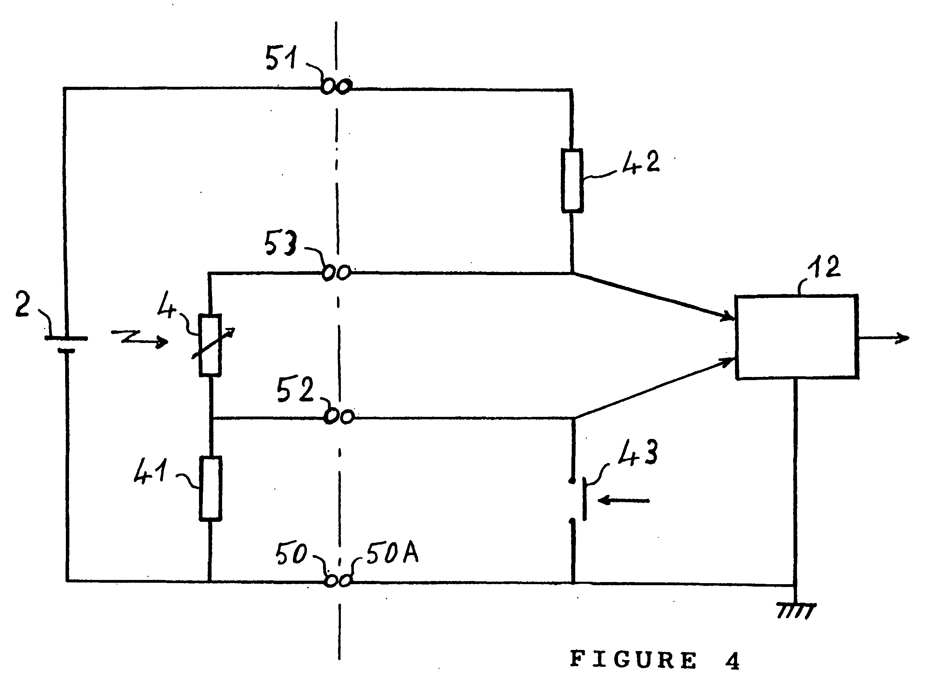

L'unité centrale comporte en entrée un convertisseur analogique/numérique (CAN) 12 mesurant la valeur de la résistance 4, par exemple par mesure de sa tension lorsqu'elle est alimentée par un courant déterminé. La figure 4 fournit le détail des circuits de mesure et est commentée plus loin. La sortie du CAN 12 est reliée à l'entrée positive d'un soustracteur 16 recevant, sur son entrée négative, la sortie d'un additionneur 15. L'additionneur 15 reçoit la sortie d'une mémoire 13 fournissant une valeur de température ambiante (définie plus loin) et la sortie d'une mémoire 14 fournissant une valeur d'un seuil de consigne, limitant la modulation de température de la batterie 2 par le courant du générateur de courant 1.

Le résultat en sortie du soustracteur 16 est intégré dans un intégrateur 17 dont le résultat est aiguillé, par un aiguilleur 19, représenté très schématiquement par une lame de relais, vers un bloc de calcul 20 ou vers un bloc de calcul 21, selon la commande de l'aiguilleur 19, provenant d'un circuit séquenceur 18.

Le bloc de calcul 20 calcule la valeur de la température ambiante et la mémorise en mémoire 13. Par température ambiante on entend la température de la batterie 2 en l'absence de courant de recharge. La température ambiante dépend donc en particulier de la température de l'air ambiant, de la température de la surface éventuelle sur laquelle est posé le combiné, de son exposition directe aux rayons solaires et aussi du courant de décharge dans les composants téléphoniques, ou charge utile, du combiné, non représentés.

Le bloc de calcul 21 commande, d'après la sortie de l'intégrateur 17, l'interrupteur 3 pour limiter le courant moyen de recharge à une valeur telle qu'il ne cause lui-même qu'un échauffement de la batterie 2 ne dépassant pas la valeur de seuil de la mémoire 14 (ou une valeur liée à celle-ci, telle que proportionnelle), et ceci indépendamment des autres causes d'échauffement. Il faut donc pouvoir discriminer l'échauffement du courant de recharge par rapport à celui dû aux autres causes indiquées ci-dessus.

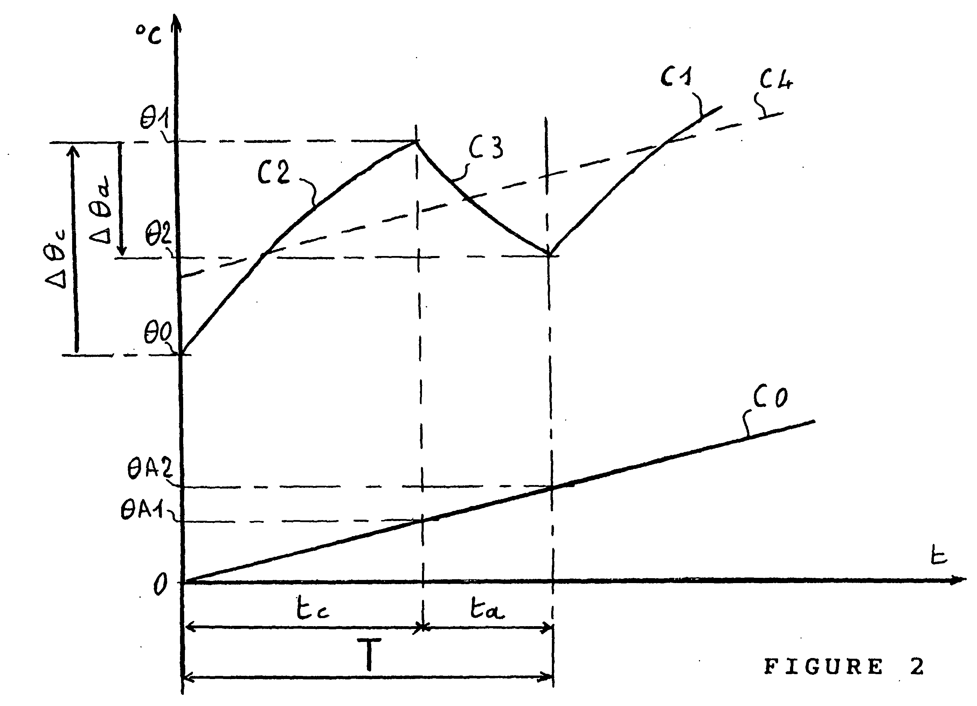

La figure 2 illustre le principe du procédé de l'invention, la température de la batterie 2 mesurée (12) étant portée en ordonnée et le temps $\underline{t}$ en abscisse.

La courbe C0 représente l'évolution de la température ambiante, de la batterie 2, telle que définie ci-dessus. Cette température croît ici selon une courbe C0 monotone et à pente sensiblement constante.

La courbe C1 représente la température de la batterie 2 effectivement mesurée, c'est-à-dire la température ambiante (C0) à laquelle s'ajoute une modulation ou variation positive due au fait que le courant de recharge varie depuis une valeur initiale, en étant appliqué cycliquement, selon des périodes T successives, à la batterie 2 pendant à chaque fois une durée de charge tc suivie d'un arrêt de durée ta. La batterie 2 reçoit donc des impulsions cycliques de courant à des instants déterminés.

Dans cet exemple,

tc = 10 mn

ta=5mn

Par rapport à l'ambiante C0, la température initiale θ0 (ici à un instant donné en régime thermique déjà établi) varie, pendant la durée tc de la première phase (courbe C2), sous l'effet de l'échauffement dû au courant de recharge, vers une valeur asymptotique haute parallèle à la courbe C0. L'échauffement perçu, qui va commander la régulation, est en toute rigueur la différence entre l'échauffement dû au courant et le refroidissement naturel pendant cette phase tc. La variation de température est à allure exponentielle, s'amortissant à mesure que l'on se rapproche de l'asymptote. En variation absolue, il s'y ajoute la dérive, positive comme ici ou bien négative, de la température ambiante C0, passant de 0 (référence arbitraire) à θA1.

Pendant la seconde phase ta de repos (courbe C3), l'excitation thermique de la batterie 2 par le courant de recharge n'existe plus et la courbe C3 a pour asymptote basse la courbe "naturelle" C0 de l'ambiante. La courbe C3 peut donc monter, si la courbe C0 monte suffisamment, ou bien, dans le cas général représenté ici, elle redescend à une valeur θ2, la température ambiante ayant alors atteint la valeur θA2. La forme en dent de scie des courbes C2, C3 se répète pour les périodes T suivantes.

En première approximation, on peut considérer, pour l'exposé, que la température ambiante C0 varie avec une constante de temps bien supérieure à la période T, c'est-à-dire que la courbe C0 est sensiblement une suite de segments de droite, chaque période T correspondant à un segment. La période T, ici 15 minutes, est cependant suffisamment grande, ici de l'ordre de grandeur de la constante de temps thermique de la batterie 2, pour que la modulation thermique soit nettement discernable et donc mesurable avec une bonne précision. D'une façon plus générale, comme l'ambiante C0 a une évolution ne présentant pas de corrélation avec la modulation thermique commandée, l'ambiante n'apporte qu'un bruit de fond dans les calculs, qui est filtré par la répétition, ou l'intégration, des résultats de ceux-ci.

La courbe C4, moyenne ou intégrale des courbes C2 et C3, s'affranchit des effets instantanés des phases tc et ta et est parallèle, à l'équilibre de la régulation du courant, à la courbe d'ambiante C0 et au-dessus, de $\Delta\theta$. Le décalage de température $\Delta\theta$ entre les courbes C0 et C4 correspond donc à un équilibre entre l'excitation thermique due au courant, pendant tc, et la "désexcitation" due à l'ambiante qui absorbe alors progressivement l'excédent thermique de la batterie 2, pendant ta. Ce rappel vers la courbe C0 est d'autant plus efficace (pente de l'exponentielle de décroissance de l'écart) que l'écart $\Delta\theta$ est grand. On peut donc ainsi estimer $\Delta\theta$ d'après l'effet de refroidissement qui en découle et qui est égal, en valeur absolue et à l'équilibre, à l'échauffement thermique produit par le courant I de recharge lorsqu'il circule, c'est-à-dire d'après ici un angle relatif de passage P.

Ici :

$$P = \frac{tc}{T} \cdot L \qquad (1)$$

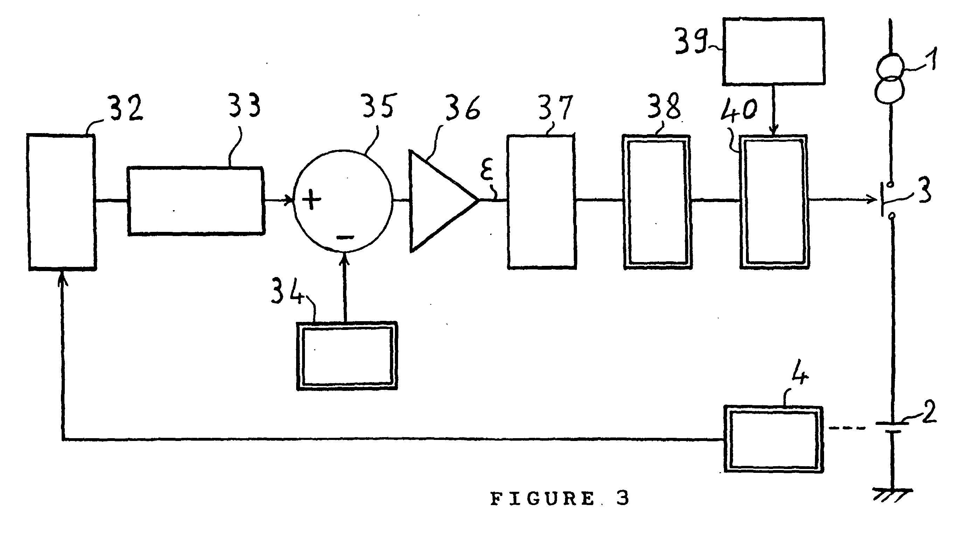

avec L : angle relatif de passage du courant dans un circuit 38 (fig. 3) de réglage de largeur d'impulsions cycliques du courant de recharge, ici de période bien inférieure à T, réglant le courant moyen voulu pour ne pas dépasser le seuil d'échauffement.

La puissance d'excitation thermique $RI^2 \cdot P$ (R résistance batterie), ou flux thermique d'échauffement, est égale au flux thermique de refroidissement, proportionnel à $\Delta\theta$. Ainsi, à l'équilibre, l'échauffement $\Delta\theta$ représente la valeur de la résistance R.

En d'autres termes, l'intégrale du flux thermique dû au courant pendant tc est égale à l'intégrale du refroidissement pendant ta.

On peut donc écrire :

$$\Delta\theta c = \theta 1 - \theta 0 = ECH + \theta A1 \qquad (2)$$

et

$$\Delta\theta a = \theta 2 - \theta 1 = RAP + (\theta A1 \cdot ta/tc) \qquad (3)$$

puisque

$$\theta A1/tc = (\theta A2 - \theta A1)\, ta, \qquad (4)$$

avec :

ECH : échauffement dû au courant de recharge, et
RAP : rappel thermique vers l'ambiante, pendant ta.

Dans cet exemple, on a choisi des durées ta et tc différentes. On va cependant s'affranchir des effets de la dérive de l'ambiante C0. L'ambiante C0, supposée varier sensiblement linéairement, a donc, dans les deux phases tc et ta, un effet de dérive de la température proportionnel à la durée tc ou ta considérée. Connaissant le rapport de ces deux durées tc et ta, on peut corriger les mesures de température pour s'affranchir de la dérive de l'ambiante C0, en normant les variations de température par rapport au temps :

$$\frac{\Delta\theta c}{tc} = \frac{\Delta\theta a}{ta} \qquad (5)$$

pour déterminer en définitive un gradient thermique par unité de temps, au moyen d'un seul capteur (4) de température.

En d'autres termes, le refroidissement naturel de la. batterie 2, proportionnel à l'échauffement moyen $\Delta\theta$, compense l'apport d'énergie thermique. Cet apport d'énergie thermique est proportionnel à la pente de conversion, ou efficacité, thermique du courant de recharge, au carré de la valeur I de ce courant et aux facteurs de forme tc/T et L. Les valeurs I, tc/T et L étant connues, $\Delta\theta c$ traduit donc directement la sensibilité thermique, ou pente de conversion, de la batterie 2 par rapport au courant de recharge.

On peut alors établir une estimation EST de l'amplitude de la modulation thermique de la batterie 2 par la modulation du courant, EST représentant $\Delta\theta$ à un facteur $\alpha$ près. En partant de l'équation (5) et en développant selon les équations (2) et (3), à l'équilibre, lorsque
ECH = - RAP, on obtient :

$$EST = \Delta\theta c - \frac{tc}{ta}\,\Delta\theta a = ECH + \theta A1 - \frac{tc}{ta}\,[-ECH + \theta A1\,\frac{ta}{tc}]$$

$$= ECH\,(1 + \frac{tc}{ta}) = \alpha\,.\,\Delta\theta = \alpha\,.\,k\,.\,I\,.\,P \qquad\qquad (6)$$

avec :
k ($^\circ$C/A) : sensibilité thermique de la batterie
et

$$\alpha = 1 + \frac{tc}{ta} = 3 \text{ ici}$$

Comme le montre la structure du terme $\alpha$, l'estimation ou échauffement fictif EST est une valeur calculée qui est proportionnelle à la valeur réelle $\Delta\theta$ d'échauffement et la représente parfaitement. Il suffit donc d'asservir la variable EST sur une valeur de seuil d'échauffement pour asservir de même l'échauffement réel $\Delta\theta$ sur une valeur correspondante de seuil.

Le courant de recharge I est fourni par un générateur de courant dont il n'est pas prévu, dans cet exemple, d'ajuster le courant instantané. En variante, il aurait pu être prévu une régulation statique au moyen d'un élément série d'impédance ajustable, comme un transistor, sans découpage du courant. Pour cependant ici régler le courant moyen pendant les phases tc, on découpe cycliquement le courant, dans le circuit 38, pour ne le laisser passer par impulsions que pendant la fraction L du temps (angle de passage relatif). Comme le courant impulsionnel équivaut à un courant continu (courant moyen) auquel se superpose une composante alternative, on peut supprimer cette dernière, et donc l'échauffement supplémentaire qu'elle induit, en la filtrant par un élément réactif en aval de l'interrupteur 3, comme par exemple une inductance série.

La figure 3 illustre le procédé de régulation.

La température de la batterie 2 étant surveillée et relevée en permanence, ou cycliquement, à partir du capteur 4 à une étape 32, on calcule, à une étape 33 :

$$EST = \Delta\theta c - \Delta\theta a\,.\,tc/ta$$

ce qui, comme indiqué précédemment, revient à comparer (soustraire) la pente d'échauffement $\Delta\theta c/tc$ et la pente de refroidissement $\Delta\theta a/ta$. Dans cet exemple, on ramène l'écart des pentes dans le domaine des températures par multiplication par une certaine durée, prise ici égale à tc. Dans un autre exemple, le seuil 34 aurait cependant pu être exprimé sous forme de pente thermique par rapport au temps. On compare (soustrait) cette valeur EST, à une étape 35, à une valeur de seuil provenant d'une mémoire 34 (équivalent de la mémoire 14). La différence obtenue est amplifiée d'un facteur G à une étape 36 pour fournir un signal d'erreur exploitable $\varepsilon$ qui est intégré à une étape 37, sur une durée glissante d'environ T, pour fournir un signal d'erreur intégré INT qui commande le réglage de la porte 38, c'est-à-dire fixe le facteur de forme L, ou pourcentage de temps de passage, et donc le courant moyen. La sortie de la porte 38 est appliquée à une entrée de la porte 40 dont une autre entrée reçoit (étape 39) un signal de facteur de forme fixe tc/T (ici 2/3) provenant du séquenceur 18 pour bloquer l'interrupteur 3 pendant ta. La sortie de la porte 40 commande l'interrupteur 3 et donc le courant moyen I.L de recharge lors de la phase tc.

Il est ainsi constitué une boucle de régulation de l'élévation de la température de la batterie 2, s'affranchissant des variations de l'ambiante.

Si la formule servant à estimer l'élévation de température était autre et présentait une certaine sensibilité aux dérivés de l'ambiante, on pourrait prévoir d'effectuer cycliquement une mesure de celle-ci, en arrêtant toute excitation (tc) pendant une ou quelques périodes T, afin de revenir sensiblement et temporairement sur la courbe C0. En pratique, on peut pour cela, dans l'exemple détaillé, forcer temporairement à zéro la valeur de consigne (14; 34).

Pour en pareil cas détecter une dérive brutale de la température ambiante, il peut être prévu que le bloc de calcul 21 comporte un comparateur pour comparer, à un seuil d'alarme, l'écart ($\varepsilon$ ou INT) entre la modulation de température mesurée et la valeur de consigne et pour commander un cycle de mesure de température ambiante si l'écart dépasse le seuil.

Grâce au procédé de l'invention, on peut ainsi réduire la valeur du courant (réduction du facteur de forme F) si la modulation de température dépasse le seuil de consigne.

De préférence, on asservit, comme expliqué, la valeur de la modulation de température sur la valeur de seuil, afin que le courant conserve une valeur maximale, permettant une recharge rapide, restant cependant compatible avec le seuil d'élévation de température. Le facteur de forme F peut donc aussi croître temporairement, si par exemple les circuits téléphoniques du terminal déchargent la batterie 2.

Le schéma de mesure de la température de la batterie 2 est représenté sur la figure 4. La batterie 2 porte une résistance 41 de valeur spécifique au type de batterie considérée et servant à identifier ce type. Elle porte aussi la résistance 4, constituée ici d'une résistance à coefficient de température négatif (CTN) connu et mémorisé dans l'unité centrale. Le bloc batterie devrait donc en principe comporter, outre une paire de bornes d'alimentation 50 et 51, deux paires de bornes de mesure des résistances 4 et 41, pour les relier à des circuits à fonction ohmmètre respectifs. Ici cependant, le bloc batterie ne comporte que quatre bornes, c'est-à-dire deux bornes de mesure 52 et 53 en plus de la paire de bornes d'alimentation 50 et 51. Pour cela, les résistances 4 et 41 sont montées en série et le dipôle ainsi constitué est relié, d'un côté, à l'une des bornes d'alimentation, ici la masse 50, et, de l'autre côté, à la borne de mesure 53. Le point milieu du dipôle est relié à l'autre borne de mesure, 52. Dans cet exemple, c'est la résistance 41 qui est reliée à la borne de masse 50.

Dans le combiné proprement dit, la borne de mesure 53 est reliée à l'alimentation positive (borne 51) par une résistance 42 d'alimentation en courant du dipôle 4, 41. Un générateur à courant strictement constant aurait pu être prévu à la place de la résistance 42.

Un interrupteur 43, ici une porte analogique représentée sous la forme d'un contact de relais, permet de relier la borne 52 à la masse sous une impédance faible, de quelques dizaines d'ohms.

Le convertisseur A/N 12, référencé à la masse servant de référence, est relié en entrée à la borne 53 èt aussi, par une autre entrée, à la borne 52.

Le fonctionnement des circuits ci-dessus est le suivant.

Pour une phase (a priori uniquement initiale) d'identification, avec mémorisation, du type de la batterie 2, le CAN 12 mesure la tension aux bornes de la résistance 41. Celle-ci a ici une valeur de 10 kohms, de même que la résistance 42, la résistance CTN, 4, ayant ici une valeur nettement plus faible de quelques centaines d'ohms. On mesure donc une valeur légèrement inférieure à 6 volts, pour une batterie 2 de valeur nominale 12 volts. Par comparaison à une table d'une pluralité de tensions de référence, ou d'identification, l'unité centrale en déduit le type de la batterie 2, c'est-à-dire retient le type dont la tension de référence est la plus voisine de celle mesurée. Cette identification permet par exemple de déterminer le courant de recharge maximal admissible lors de la phase de recharge chimique et de limiter en conséquence le facteur de forme L.

Les diverses valeurs de référence, en nombre limité, sont suffisamment distinctes entre elles pour tolérer les dispersions de tension batterie, de valeur de résistance 41 et le bruit électrique. Ce bruit provient en particulier des variations du courant utile de la batterie 2 à travers la résistance parasite du contact entre la borne 50 et une borne homologue 50A de masse d'un logement du boîtier du combiné réservé à la batterie 2, la ligne en pointillés indiquant la limite (connecteur quatre points) de ce logement. La résistance 41 est aussi une source de bruit.

Comme la résistance 4 est ici de faible valeur par rapport à la résistance 41, il pourrait même être prévu de mesurer la tension de la borne 53, donc alors un peu supérieure à 6 volts. La borne 52 serait alors inutile dans cette phase et le convertisseur 12 n'aurait qu'une seule entrée.

Ainsi, pour fixer une valeur maximale admissible du courant de recharge,

- on monte la résistance 41, de valeur spécifique à la batterie 2, en série avec le circuit d'alimentation en courant 42 pour former un pont diviseur que l'on alimente par la batterie 2,
- on mesure la tension du point milieu du pont diviseur et,
- on en déduit, par consultation d'une table pré-établie, le courant maximal.

Pour une phase de mesure de la température de la batterie 2, on mesure la tension de la borne 53 de la résistance CTN 4, en fermant à la masse l'interrupteur 43. La sensibilité du CAN 12 peut être ici accrue afin de compenser l'effet atténuateur dû à la faible valeur de la CTN 4. La résistance 42, de valeur ici bien supérieure, fournit un courant quasi constant, si bien que la tension de la borne 53, et sa variation avec la température, traduit, sensiblement linéairement, la variation de résistance de la CTN 4, dont la courbe de dépendance par rapport à la température est mémorisée. Si le courant variait cependant avec la valeur de la CTN 4, la courbe ci-dessus serait corrigée en conséquence. La CTN 4 est ainsi temporairement reliée sous faible impédance, par l'interrupteur 43, à une masse qui lui est propre et qui court-circuite quasiment le bruit électrique provenant du contact 50, 50A à travers la résistance 41 de forte valeur. Le pont diviseur de bruit 43-41 isole ainsi la résistance 4 vis-à-vis du générateur de bruit ci-dessus. On peut en outre effectuer une mesure différentielle entre les deux entrées (52, 53) du CAN 12, afin d'éliminer l'influence de la résistance parasite de l'interrupteur 43.

On remarquera que, en ce qui concerne le nombre limité de bornes de la batterie 2, rien ne s'oppose à ce que la résistance 42 et même l'interrupteur 43 soient implantés sur la batterie 2, ou que, inversement, la thermistance 4 soit solidaire du logement et accessible au corps de la batterie 2.

Ainsi, pour déterminer la température de la batterie 2,

- on intercale en série, au milieu du pont diviseur, l'élément résistif 4 de valeur sensible à la température et on le couple thermiquement avec la batterie 2,
- on court-circuite la résistance d'identification 41 par une liaison de potentiel de référence, 50A,
- on mesure la tension de la borne 53 de l'élément résistif 4 opposée à l'autre borne 52 au potentiel de référence, et
- on en déduit, par consultation d'une table pré-établie, la température de l'élément résistif 4 et donc de la batterie 2.

Ainsi, dans ce schéma, le montage des deux résistances 4 et 41, dans un même circuit série, sans isolation galvanique entre elles, permet de les alimenter depuis une borne commune, la seule borne 53, et l'interrupteur 43 permet de rétablir, quand besoin est, l'isolation alternative voulue (perdue par la disparition de l'isolation galvanique) entre le contact de masse 50, 50A et la résistance variable 4. On remplace ainsi une coupure galvanique, série, par un court-circuit parallèle.

## Revendications

1. Procédé de contrôle de la recharge d'une batterie (2) à partir d'un générateur de courant (1), procédé dans lequel :

   - on applique un courant de charge à la batterie (2)
   - on surveille la température de la batterie (2) pour y rechercher et mesurer une variation de température, et
   - on compare la variation de température à un seuil de consigne (14 ; 34) pour réduire (38) la valeur du courant si la variation de température dépasse le seuil,
   - on fait varier cycliquement la valeur du courant de charge à partir d'une valeur initiale, procédé **caractérisé par le fait que**

     - on estime l'amplitude (EST) de la variation de température de la batterie (2) en comparant (33) la pente d'échauffement de la batterie ($\Delta\theta c/tc$) et la pente de refroidissement de la batterie

$$\left[ \frac{\Delta\theta_A}{ta} \right],$$

       pour s'affranchir des variations de la température ambiante, et on compare (35) l'amplitude estimée EST à un seuil (34) pour fournir un signal d'erreur (36, 37) et
     - commander le courant de charge moyen.

2. Procédé selon la revendication 1, dans lequel on interrompt temporairement la recharge pour mesurer la température ambiante (CO).

3. Procédé selon la revendication 2, dans lequel on mesure la température ambiante (CO) lorsque la variation de température mesurée tend à s'écarter du seuil de consigne (14 ; 34).

4. Procédé selon l'une des revendications 2 et 3, dans lequel on mesure la température ambiante (CO) en forçant temporairement à zéro la valeur de consigne (14; 34).

5. Procédé selon l'une des revendications 1 à 4, dans lequel on détermine l'amplitude de la variation de température par calcul de la somme de la température ambiante (13) et de la valeur du seuil de consigne (14) et soustraction de la température mesurée (4, 12).

**EP 1 110 295 B1**

**6.** Procédé selon la revendication 5, dans lequel on intègre (17) le résultat du calcul sur une durée déterminée.

**7.** Procédé selon l'une des revendications 1 à 6, dans lequel on règle la valeur du courant moyen en laissant passer le courant pendant un pourcentage variable du temps.

**8.** Procédé selon l'une des revendications 1 à 6, dans lequel, pour fixer une valeur maximale admissible du courant de recharge,

- on monte une résistance (41), de valeur spécifique à la batterie (2), en série avec un circuit d'alimentation en courant (42) pour former un pont diviseur que l'on alimente par la batterie (2),
- on mesure la tension du point milieu du pont diviseur et
- on en déduit, par consultation d'une table pré-établie, le courant maximal.

**9.** Procédé selon la revendication 8, dans lequel, pour déterminer la température de la batterie (2),

- on intercale en série, au milieu du pont diviseur, un élément résistif (4) de valeur sensible à la température et on le couple thermiquement avec la batterie (2),
- on court-circuite la résistance d'identification (41) par une liaison de potentiel de référence,
- on mesure la tension d'une borne (53) de l'élément résistif (4) opposée à une autre borne (52) au potentiel de référence, et

on en déduit, par consultation d'une table pré-établie, la température de l'élément résistif (4) et donc de la batterie (2).

**10.** Dispositif de contrôle de recharge d'une batterie (2) agencée pour être alimentée par un chargeur de courant (1), comportant

- des moyens (4, 12) de mesure de la température de la batterie (2),
- des moyens (14; 34) de fourniture d'une valeur de seuil de consigne de variation de température de la batterie (2),
- des moyens de variation (3, 40) pour faire varier le courant de recharge,
- des moyens séquenceurs (18) pour commander cycliquement les moyens de variation (3, 40), **caractérisé par le fait qu'**il comporte

    - des moyens de calcul (15, 16, 17, 19, 20, 21), reliés en entrée aux moyens de fourniture de seuil (14) et aux moyens de mesure de température (4, 12) pour en déterminer une valeur de variation de température de la batterie par comparaison entre la pente d'échauffement et la pente de refroidissement de la batterie et pour commander des moyens (3, 21, 38) de réglage du courant d'après l'écart entre la variation de température et la valeur de seuil.

**11.** Dispositif selon la revendication 10, dans lequel les moyens de réglage comportent un élément série (3, 40) de contrôle de passage cyclique d'impulsions de courant de durée réglable.

**12.** Dispositif selon l'une des revendications 10 et 11, dans lequel les moyens de calcul comportent un circuit sommateur (15, 16), agencé pour recevoir la valeur de température mesurée (12), y ajouter la valeur de seuil et y retrancher une valeur de température ambiante (13) et pour commander en conséquence un circuit intégrateur (17) de calcul de la variation de température.

**13.** Dispositif selon la revendication 12, dans lequel le circuit intégrateur (17 ; 37) commande un circuit (21 ; 38) de détermination du courant moyen de charge, commandant les moyens de réglage (3, 40).

**14.** Dispositif selon l'une des revendications 12 et 13 dans lequel le circuit intégrateur (17) commande un circuit (20) de calcul de la température ambiante.

**15.** Dispositif selon l'une des revendications 10 à 14, dans lequel les moyens de calcul comportent des moyens comparateurs pour comparer, à un seuil, l'écart entre la modulation de température mesurée et la valeur de consigne (14) et pour commander un cycle de mesure de température ambiante si l'écart dépasse le seuil.

**Patentansprüche**

1. Verfahren zur Steuerung der Aufladung einer Batterie (2) ausgehend von einem Stromgenerator (1), Verfahren bei welchem:

   - man einen Ladestrom an die Batterie (2) anlegt,
   - man die Temperatur der Batterie (2) überwacht, um dort eine Temperaturänderung zu ermitteln und zu messen, und
   - man die Temperaturänderung mit einem vorgegebenen Schwellwert (14; 34) vergleicht, um den Wert des Stroms zu verringern (38), wenn die Temperaturänderung den Schwellwert überschreitet,
   - man den Wert des Ladestroms, ausgehend von einem Anfangswert, zyklisch ändert,

   wobei das Verfahren **dadurch gekennzeichnet ist, daß**

   - man die Amplitude (EST) der Temperaturänderung der Batterie (2) abschätzt, indem man die Steigung der Erwärmung der Batterie ($\Delta\theta c/t_c$) und die Steigung der Abkühlung der Batterie

   $$\left[\frac{\Delta\theta_A}{ta}\right]$$

   vergleicht (33), um sich von Änderungen der Umgebungstemperatur freizumachen, und man die geschätzte Amplitude EST mit einem Schwellwert (34) vergleicht (35), um ein Fehlersignal (36, 37) zu liefern und
   - den mittleren Ladestrom zu steuern.

2. Verfahren nach Anspruch 1, wobei man das Aufladen vorübergehend unterbricht, um die Umgebungstemperatur (CO) zu messen.

3. Verfahren nach Anspruch 2, wobei man die Umgebungstemperatur (CO) mißt, wenn die gemessene Temperaturänderung die Tendenz hat, sich von dem vorgegebenen Schwellwert (14; 34) zu entfernen.

4. Verfahren nach einem der Ansprüche 2 und 3, wobei man die Umgebungstemperatur (CO) mißt, indem man den vorgegebenen Wert (14; 34) vorübergehend auf Null zwingt.

5. Verfahren nach einem der Ansprüche 1 bis 4, wobei man die Amplitude der Temperaturänderung durch Berechnung der Summe aus der Umgebungstemperatur (13) und dem Wert des vorgegebenen Schwellwerts (14) und Subtraktion der gemessenen Temperatur (4, 12) bestimmt.

6. Verfahren nach Anspruch 5, wobei man das Ergebnis der Berechnung über eine vorgegebene Zeitdauer integriert (17).

7. Verfahren nach einem der Ansprüche 1 bis 6, wobei man den Wert des mittleren Stroms regelt, indem man den Strom während eines variablen prozentualen Anteils der Zeit passieren läßt.

8. Verfahren nach einem der Ansprüche 1 bis 6, wobei man zum Festlegen eines zulässigen Maximalwerts des Ladestroms

   - einen Widerstand (41) mit einem für die Batterie (2) spezifischen Wert in Reihe mit einer Stromversorgungsschaltung (42) anordnet, um eine Teilerbrücke zu bilden, die man über die Batterie (2) speist,
   - man die Spannung des mittleren Punktes der Teilerbrücke mißt und
   - man durch Konsultation einer zuvor errichteten Tabelle daraus den Maximalstrom ableitet.

9. Verfahren nach Anspruch 8, wobei man zur Bestimmung der Temperatur der Batterie (2),

   - in der Mitte der Teilerbrücke in Reihe ein Widerstandselement (4) mit einem temperaturempfindlichen Wert zwischenschaltet und man dieses thermisch mit der Batterie (2) koppelt,
   - man den Identifikationswiderstand (41) mit einer Bezugspotentialverbindung kurzschließt,

man die Spannung eines Anschlusses (53) des Widerstandselementes (4) mißt, der entgegengesetzt zu einem anderen Anschluß (52) auf Bezugspotential angeordnet ist, und man daraus durch Konsultation einer zuvor errichteten Tabelle die Temperatur des Widerstandselementes (4) und folglich der Batterie (2) ableitet.

10. Vorrichtung zur Steuerung der Aufladung einer Batterie (2), die eingerichtet ist, um von einer Stromladeeinrichtung (1) gespeist zu werden, mit

- Mitteln (4, 12) zur Messung der Temperatur der Batterie (2),
- Mitteln (14; 34) zur Bereitstellung eines vorgegebenen Schwellwertes für die Temperaturänderung der Batterie (2),
- Änderungsmitteln (3, 40) zum Ändern des Ladestroms,
- Ablaufsteuermitteln (18) zum zyklischen Steuern der Änderungsmittel (3, 40),

    **dadurch gekennzeichnet, daß** sie ausweist

- Rechenmittel (15, 16, 17, 19, 20, 21), die eingangsseitig mit den Mitteln zur Schwellwertbereitstellung (14) und mit den Temperaturmeßmitteln (4, 12) verbunden sind, um durch Vergleich der Steigung der Erwärmung und der Steigung der Abkühlung der Batterie daraus einen Wert der Temperaturänderung der Batterie zu bestimmen und Mittel (3, 21, 38) zur Stromregelung entsprechend der Differenz zwischen der Temperaturänderung und dem Schwellwert zu steuern.

11. Verfahren nach Anspruch 10, wobei die Regelmittel ein Serienelement (3, 40) zur Steuerung des zyklischen Durchgangs von Stromimpulsen regelbarer Dauer aufweisen.

12. Verfahren nach einem der Ansprüche 10 und 11, wobei die Rechenmittel eine Summierschaltung (15, 16) aufweisen, die eingerichtet ist, um den gemessenen Temperaturwert (12) aufzunehmen, dazu den Schwellwert hinzuzufügen und davon einen Umgebungstemperaturwert (13) abzuziehen und um entsprechend eine Integratorschaltung (17) zur Berechnung der Temperaturänderung zu steuern.

13. Verfahren nach Anspruch 12, wobei die Integratorschaltung (17; 37) eine Schaltung (21; 38) zur Bestimmung des mittleren Ladestroms (21; 38) steuert, die die Regelmittel (3, 40) steuert.

14. Verfahren nach einem der Ansprüche 12 und 13, wobei die Integratorschaltung (17) eine Schaltung (20) zur Berechnung der Umgebungstemperatur steuert.

15. Verfahren nach einem der Ansprüche 10 bis 14, wobei die Rechenmittel Komparatormittel aufweisen, um die Differenz zwischen der Modulation der gemessenen Temperatur und dem vorgegebenen Wert (14) mit einem Schwellwert zu vergleichen und einen Zyklus zur Messung der Umgebungstemperatur zu steuern, wenn die Differenz den Schwellwert überschreitet.

## Claims

1. Process for controlling the recharging of a battery (2) from a current generator (1), a method whereby:

- a charging current is applied to the battery (2)
- the temperature of the battery (2) is monitored in order to find and measure any variation in temperature, and
- the variation in temperature is compared with an assigned threshold (14; 34) in order to reduce (38) the figure for the current if the variation in temperature exceeds the threshold,
- the figure for the charging current is varied cyclically as from an initial figure, this process being **characterised in that**:

- the estimated extent (EST) of the variation in temperature of the battery (2) is found by comparing (33) the gradient of heating of the battery ($\Delta\theta c/tc$) and the gradient of cooling of the battery

$$\left[\frac{\Delta\theta_{A}}{t_{a}}\right]$$

to clear variations from the ambient temperature, and the estimated extent EST is compared (35) with a threshold (34) in order to supply an error signal (36, 37), and

- to control the mean charging current.

2. Process according to Claim 1 whereby the recharging is temporarily interrupted in order to measure the ambient temperature (CO).

3. Process according to Claim 2 whereby the ambient temperature (CO) is measured when the variation in temperature measured tends to go away from the design threshold (14; 34).

4. Process according to one of the Claims 2 and 3, whereby the ambient temperature (CO) is measured by temporarily forcing the design figure (14; 34) to zero.

5. Process according to one of the Claims 1 to 4, whereby the extent of the variation in temperature is determined by calculating the sum of the ambient temperature (13) and the figure for the design threshold (14) and subtracting the temperature measured (4, 12).

6. Process according to Claim 5, whereby the result of the calculation is integrated (17) over a predetermined period of time.

7. Process according to one of the Claims 1 to 6, whereby the figure for the mean current is adjusted by letting the current pass for a variable percentage of the time.

8. Process according to one of the Claims 1 to 6 whereby, in order to fix a maximum permissible figure for the recharging current,

- a resistor (41) of a specific value is fitted to the battery (2), in series with a current supply circuit (42) in order to form a divider bridge which is supplied by the battery (2),
- the voltage of the centre point of the divider bridge is measured, and
- the maximum current is deduced from it by consulting a table drawn up previously.

9. Process according to Claim 8 whereby, to determine the temperature of the battery (2),

- a resistive element (4) with a temperature-sensitive value is inserted in series, at the centre of the divider bridge, and is coupled thermally with the battery (2),
- the identification resistor (41) is short-circuited through a datum potential link,
- the voltage of a terminal (53) of the resistive element (4) is measured, opposite to another terminal (52) at the datum potential, and
- the temperature of the resistive element (4), and therefore of the battery (2), is deduced from it by consulting a table drawn up previously.

10. Device for controlling the recharging of a battery (2) arranged to be supplied by a current charger (1), consisting of

- means (4, 12) of measuring the temperature of the battery (2),
- means (14, 34) of providing a design threshold figure for temperature variation of the battery (2),
- means of variation (3, 40) to vary the recharging current,
- sequencing means (18) for cyclically controlling the means of variation (3, 40), **characterised in that** it comprises

    - means of calculation (15, 16, 17, 19, 20, 21), connected on entry to the threshold supplying means (14) and to the temperature measuring means (4, 12) in order to determine a figure for temperature variation of the battery by comparison between the heating gradient and the cooling gradient of the battery and to control the means (3, 21, 38) for adjusting the current according to the difference between the temperature variation and the threshold figure.

11. Device according to Claim 10, whereby the means of adjustment comprise a series element (3, 40) for controlling the cyclic passage of current pulses of adjustable duration.

12. Device according to Claims 10 and 11, whereby the means of calculation contain an adding circuit (15, 16) arranged to take the temperature figure measured (12), add the threshold figure to it and take away an ambient temperature figure (13) from it, and consequently to operate an integrator circuit (17) for calculating the variation in temperature.

13. Device according to Claim 12, whereby the integrator circuit (17; 37) operates a circuit (21; 38) for determining the mean charging current, controlling the means of adjustment (3, 40).

14. Device according to one of the Claims 12 and 13, whereby the integrator circuit (17) operates a circuit (20) for calculating the ambient temperature.

15. Device according to one of the Claims 10 to 14, whereby the means of calculation contain comparative means for comparing, with a threshold, the difference between the temperature modulation measured and the design figure (14), and for operating a cycle for measuring ambient temperature if the difference goes beyond the threshold.

FIGURE 1

EP 1 110 295 B1

FIGURE 2

EP 1 110 295 B1

FIGURE 3

FIGURE 4